# EUROPÄISCHE PATENTSCHRIFT

(11) **EP 2 324 339 B1**
(45) Veröffentlichungstag und Bekanntmachung des Hinweises auf die Patenterteilung: **25.12.2019**
(21) Anmeldenummer: 09781284.6
(22) Anmeldetag: 30.07.2009
(51) Int. Cl.: G01N 17/02, G01N 27/28

(54) **KORROSIONSTESTSONDE**
CORROSION TEST SENSOR
SONDE D'ESSAI DE CORROSION

(30) Priorität: 05.09.2008 DE 102008046118; 11.03.2009 DE 102009012711; 11.03.2009 DE 102009012712; 11.03.2009 DE 202009003474 U
(43) Veröffentlichungstag der Anmeldung: 25.05.2011
(73) Patentinhaber: RWE Power AG, 45128 Essen (DE)
(72) Erfinder: STÖCKER, Bernhard, 86152 Augsburg (DE)
(74) Vertreter: Cohausz & Florack
(86) Internationale Anmeldenummer: PCT/EP2009/059863
(87) Internationale Veröffentlichungsnummer: WO 2010/026001

(56) Entgegenhaltungen:
- EP-A- 0 330 549
- GB-B- 2 215 849
- US-A- 4 627 905
- US-A1- 2003 184 320
- US-B1- 6 181 760

## Beschreibung

Die Erfindung betrifft einen Sondenkopf für eine Korrosionstestsonde nach dem Oberbegriff von Anspruch 1 sowie eine Korrosionstestsonde mit einem solchen Sondenkopf.

Aus der US 3,486,996-B ist eine Korrosionstestsonde bekannt, welche zur Erfassung der Korrosionsrate von metallischen Konstruktionsteilen, die bei hoher Temperatur (d. h. bei T > 100° C) einem korrosiven Elektrolyt ausgesetzt sind, eingesetzt wird. Die Erfassung der Korrosionsrate erfolgt über eine Polarisationsmessung mit einer länglichen gattungsgemäßen Korrosionstestsonde, welche drei voneinander getrennte Messelektroden aus metallischem Material umfasst, nämlich eine Arbeitselektrode, eine Gegenelektrode und eine Referenzelektrode. Die Messelektroden sind durch Isolierringe aus geschichtetem Phenolharz gegeneinander elektrisch isoliert. Hierfür sind die Isolierringe und die Messelektroden miteinander über Schraubgewinde verschraubt. Die Messelektroden werden über elektrische Leitungen, welche im inneren der zylindrischen Korrosionstestsonde verlaufen, an einen Potentiostaten angeschlossen.

Mit einer solchen aus dem Stand der Technik bekannten Korrosionstestsonde kann beispielsweise die Korrosionsrate von Leitungen, Rohren oder Behältern erfasst werden, die von einem korrosiven Fluid um- oder durchströmt werden. Hierfür werden die Materialien der Messelektroden so ausgewählt, dass sie mit dem Material der Leitung, des Rohres bzw. des Behälters übereinstimmen, so dass von der mit der Korrosionstestsonde erfassten Korrosionsrate unmittelbar auf die Korrosionsrate der Leitung, des Rohres oder des Behälters geschlossen werden kann. Ein mögliches Einsatzfeld für eine gattungsgemäße Korrosionstestsonde ist die Erfassung der Korrosionsrate an metallischen Wärmetauschern von Großfeuerungsanlagen (Biomasse, MVA, Kohlekraftwerke usw.), in der die hohe Korrosivität der entstehenden Abgase zu einem hohen Materialabtrag an den metallischen Wärmetauscherrohren führt, über die den Abgasen zur Erzeugung von (überhitztem) Wasserdampf Wärme entzogen wird. Insbesondere die Korrosion im Bereich der Kesselwände und der Überhitzerrohre stellt in einer Großfeuerungsanlage einen bedeutenden Kostenfaktor dar. Durch eine Reduktion der Korrosion können einerseits die Aufwendungen für Wartung und Instandhaltung der Verbrennungsanlage reduziert und andererseits kürzere Stillstände der Anlage während einer Revision ermöglicht werden. Aus diesen Gründen wurden bereits große Anstrengungen unternommen, einerseits die Ursachen der Korrosionsprozesse in solchen Verbrennungsanlagen zu klären und andererseits, verbunden mit einer In-Situ-Erfassung der Korrosionsrate und eine geeignete Steuerung der Verbrennungsanlage, Maßnahmen zur Reduzierung der Korrosionsrate einzuleiten.

Zur In-Situ-Erfassung der Korrosionsrate in einer Verbrennungsanlage wird die Korrosionstestsonde in den Kessel eingeführt und elektrisch mit einem Potentiostaten verbunden. Bei laufendem Betrieb der Verbrennungsanlage wird die Korrosionstestsonde von den korrosiven Gasen in dem Kessel umströmt. Dadurch kann die Korrosionsrate innerhalb des Kessels bzw. des Überhitzerrohres über eine elektrochemische Messung erfasst werden. Das elektrochemische Messverfahren basiert auf der Messung der elektrischen Signatur, d.h., dem Ladungstransfer zwischen dem Material, dessen Korrosionsrate bestimmt werden soll und dem korrosiven Medium, welches durch den Kessel bzw. das Überhitzerrohr strömt, während der für den Korrosionsprozess charakteristischen Reaktionen. Aus dem Stand der Technik sind verschiedene Messprinzipien bekannt. Das einfachste Messverfahren, mit dem eine Korrosionstestsonde betrieben werden kann, ist die Messung des statischen oder quasistatischen Polarisationsleitwert. Hier wird zum einen das freie Korrosionspotential bei einer stromlosen Messung und zum anderen eine Strom-Spannungskennlinie mit vorgegebener zeitlicher Änderung der Spannung aufgenommen. Vorzugsweise geschieht dies in einer Drei-Elektroden-Schaltung, wie sie aus der Korrosionstestsonde der US 3,486,996-B bekannt ist. Hierbei wird die angelegte Spannung (Überspannung) gegen eine unabhängige (stromlose) Referenzelektrode geregelt und der zwischen der Arbeitselektrode und der Gegenelektrode fließende Strom gemessen. Aus der Steigung der Kennlinie kann über eine einfache mathematische Relation der Korrosionsstrom bzw. eine zu diesem proportionale Messgröße ermittelt werden. Diese Messprinzipien sind aus dem Stand der Technik bekannt.

Bei der Verwendung der bekannten Korrosionstestsonde für die In-Situ-Erfassung der Korrosionsrate in den Behältern und Leitungen einer Verbrennungsanlage hat sich gezeigt, dass die Korrosionstestsonde nicht dicht genug ist, um das Eindringen der hochkorrosiven Abgase aus dem Verbrennungsprozess in das Innere der Korrosionstestsonde zu verhindern. Durch das Eindringen der hochkorrosiven Abgase in das Innere der Sonde kann jedoch die Funktion der Sonde beeinträchtigt werden, insbesondere wegen einer Verschlechterung der elektrischen Kontaktierung der im Inneren der Sonde verlaufenden elektrischen Leitungen.

Ein Sondenkopf für eine Korrosionstestsonde mit sämtlichen Merkmalen des Oberbegriffs von Patentanspruch 1 ist aus der GB 2 215 849 B bekannt. Der dort beschriebene Sondenkopf ist hinsichtlich seiner Dichtigkeit gegen das Eindringen korrosiver Gasen insbesondere bei Temperaturschwankungen verbesserungswürdig.

Hiervon ausgehend liegt der Erfindung die Aufgabe zugrunde, einen Sondenkopf für eine Korrosionstestsonde bereit zu stellen, der eine höhere Dichtigkeit gegen das Eindringen von korrosiven Gasen in das Sondeninnere und damit eine längere Lebensdauer aufweist. Insbesondere soll die Dichtigkeit des Sondenkopfs der Korrosionstestsonde auch unter dem Einfluss von starken oder schnellen Temperaturschwanken, bspw. bei einem abrupten Stopp oder bei einer Reinigung der Anlage, in der die Testsonde betrieben wird, gewährleistet bleiben. Ferner soll eine Korrosionstestsonde aufgezeigt werden, welche bei sehr hohen Messtemperaturten von 400°C oder mehr einsetzbar ist und reproduzierbare und dem Korrosionspotential des die Testsonde im Betrieb umgebenden Materials entsprechende Messwerte liefert.

Gelöst werden diese Aufgaben mit einem Sondenkopf mit allen Merkmalen des Anspruchs 1 sowie mit einer Korrosionstestsonde mit allen Merkmalen des Anspruchs 11. Bevorzugte Ausgestaltungen des erfindungsgemäßen Sondenkopfs und der erfindungsgemäßen Korrosionstestsonde sind den Unteransprüchen zu entnehmen.

Nachfolgend wird die Erfindung anhand eines Ausführungsbeispiels unter Bezugnahme auf die begleitenden Zeichnungen näher erläutert. Die Zeichnungen zeigen:
- Fig. 1:: Perspektivische Darstellung einer erfindungsgemäßen Korrosionstestsonde;
- Fig. 2:: Detailansicht des Sondenkopfs der Korrosionstestsonde von Fig. 1;
- Fig. 3:: Explosionsdarstellung der Korrosionstestsonde von Fig. 1;
- Fig. 4:: Explosionsdarstellung einer alternativen Ausführungsform des Sondenkopfs;
- Fig. 5:: Detailansicht der Endplatte des Sondenkopfs von Fig. 2;

Die erfindungsgemäße Korrosionstestsonde wird im Folgenden anhand eines Ausführungsbeispiels einer Korrosionstestsonde zur In-Situ-Erfassung der Korrosionsrate in den Überhitzerrohren einer Verbrennungsanlage dargestellt. Hierfür wird die nachfolgend beschriebene Sonde bei laufendem Betrieb der Verbrennungsanlage parallel zu den von den korrosiven Abgasen durchströmten Überhitzerrohren eingeführt und elektrisch mit einem

Korrosionsmeter zur Durchführung der elektrochemischen Messungen verbunden. Die erfindungsgemäße Korrosionstestsonde kann jedoch auch für andere Anwendungen eingesetzt werden, in denen die Korrosionsrate von metallischen Bauteilen, welche einem korrosiven Medium ausgesetzt sind, zu erfassen ist.

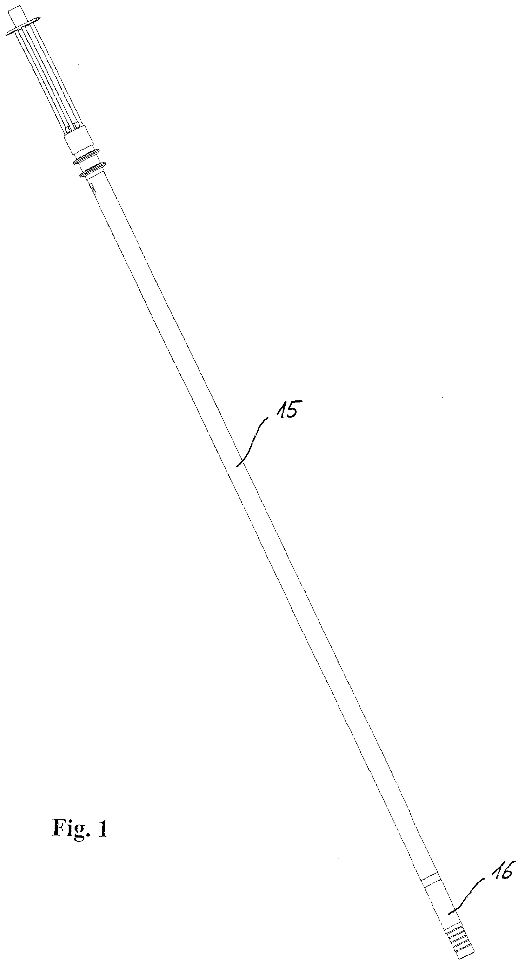

Die in Fig. 1 gezeigte Korrosionstestsonde umfasst eine Trägerlanze 15 und einen daran angeordneten Sondenkopf 16. Der Sondenkopf 16 ist abnehmbar an der Trägerlanze 15 befestigt. In dem hier zeichnerisch dargestellten Ausführungsbeispiel der erfindungsgemäßen Korrosionstestsonde ist der Sondenkopf 16 mit der Trägerlanze 15 verschraubt. Andere Befestigungsmöglichkeiten, wie z.B. über einen Schnapp-, Klemm- oder Bajonett-Verschluss, können ebenfalls realisiert werden.

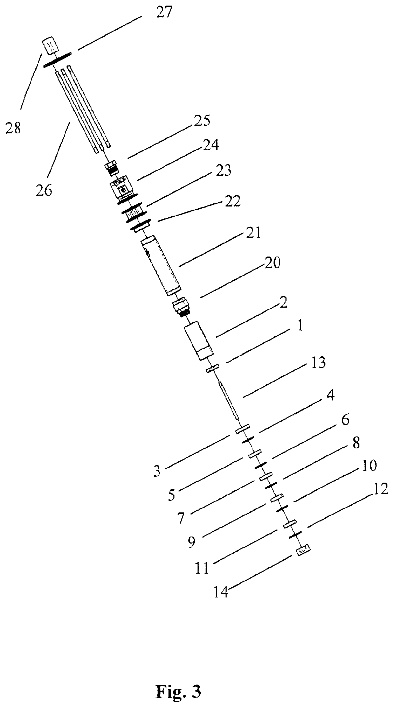

Wie aus der Explosionsdarstellung der Figur 3 ersichtlich setzt sich die Trägerlanze 15 aus einer Hülse 21, einem unteren Verbindungsstück 20, einem oberen Verbindungsstück 22, einem Zwischenstück 23, einer Quetschverschraubung 24 mit einer Druckschraube 25, drei Haltestangen 26 und einer Halteplatte 27 mit einem Befestigungszylinder 28 zusammen. Die Hülse 21 ist in der Explosionszeichnung der Figur 3 aus Gründen der Übersichtlichkeit verkürzt dargestellt. Die Trägerlanze 15 hat eine Länge von ca. 2m. Die Hülse 21 ist mit dem oberen und unteren Verbindungsstück 20, 22 verschweißt. Die Haltestangen 26 sind über den Befestigungszylinder 28 an der Halteplatte 27 und über die Quetschverschraubung 24, 25 an dem Zwischenstück 23 befestigt.

In der Trägerlanze 15 ist eine Kühleinrichtung mit einer kombinierten Luft- und Wasserkühlung vorgesehen. Über diese Kühleinrichtung wird die Trägerlanze 15 und der Sondenkopf 16 gekühlt. Der Sondenkopf 16 wird während der Messung in den ca. 900°C heißen Abgasen der Verbrennungsanlage durch die Kühleinrichtung auf einer konstanten Messtemperatur gehalten, wobei die Messetemperatur der Rohr- bzw. Behälterwand entspricht, deren Korrosionsrate erfasst werden soll. Bei dem vorgesehenen Einsatzzweck der erfindungsgemäßen Korrosionstestsonde in einer Verbrennungsanlage ist dies die Temperatur der Überhitzerrohre während des Betriebs, welche typischerweise bei ca. 400 °C liegt. Die in der Trägerlanze 15 angeordnete Kühleinrichtung umfasst eine Wasserkühlung mit Kühlleitungen, welche in der Trägerlanze 15 angeordnet sind und diese auf Temperaturen von ca. 50 °C abkühlt. Weiterhin ist in der Trägerlanze 15 eine Kühlleitung vorgesehen, durch welche ein Kühlfluid, insbesondere Luft, zum Sondenkopf 16 geleitet wird. Der Sondenkopf 16 wird nur durch diese Luftkühlung auf die Messtemperatur von beispielsweise 400 °C abgekühlt und über eine Temperaturregelung auf konstanter Messtemperatur gehalten. Die Zuleitung der Kühlleitungen von außen in die Trägerlanze ist in dem Zwischenstück 24 angeordnet, welches über entsprechende Anschlüsse für Kühlfluide (Kühlwasser und Kühlluft) verfügt. Der Austritt der Kühlleitungen erfolgt aus der Hülse 21.

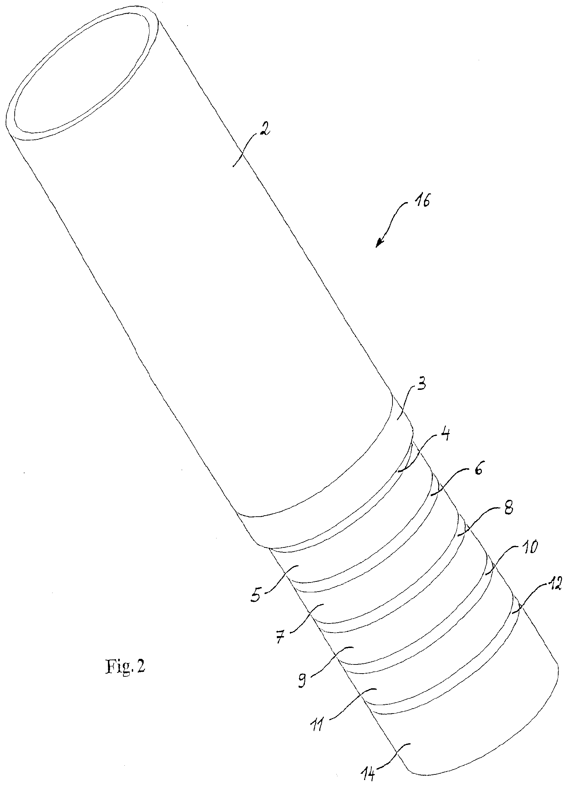

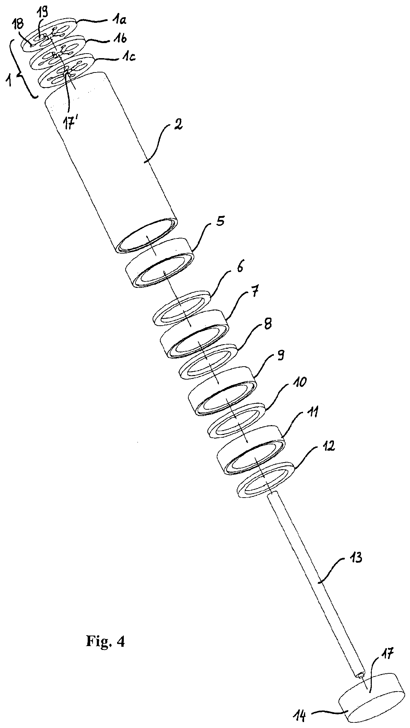

Der in den Figuren 2 und 4 im Detail dargestellte Sondenkopf 16 trägt die Messelektroden. Bei dem hier zeichnerisch dargestellten Ausführungsbeispiel sind am Sondenkopf 16 insgesamt 4 Messelektroden angeordnet, nämlich eine Arbeitselektrode 11, eine Gegenelektrode 7 und eine Referenzelektrode 9, sowie eine Kalibrierelektrode 5. Die Elektroden 5, 7, 9 und 11 sind voneinander durch Isolierringe 6, 8 und 10 getrennt und gegeneinander elektrisch isoliert. Die Elektroden 5, 7 und 11 sind aus dem gleichen Material wie das von dem korrosiven Fluid durchströmte Rohr bzw. Behälterwand. Die Referenzelektrode 9 ist aus einem inerten Material, welches von dem korrosiven Fluid nicht angegriffen wird. Bei dem hier vorgesehenen Anwendungsbeispiel in einer Verbrennungsanlage sind die Elektroden 5,7 und 11 wie die Rohrwandung der Überhitzerrohre der Verbrennungsanlage aus dem Stahl 15 Mo3.

Bei den Isolierringen 6, 8 und 10 handelt es sich erfindungsgemäß um Keramikringe aus Al₂O₃ oder Si₃N₄. Die Verwendung von Keramikringen aus Si₃N₄. hat den Vorteil, dass dieses Material neben seiner chemischen und thermischen Widerstandsfähigkeit auch über einen niedrigen thermischen Ausdehnungskoeffizienten (verglichen bspw. mit anderen Keramiken wie Al₂O₃) verfügt. Dies verringert die thermischen Spannungen zwischen den Isolierringen 6, 8 und 12 und den Messelektroden 5, 7, 9 beträchtlich und trägt zu einer besseren Dichtigkeit des Sondenkopfs 16 bei. Darüber hinaus zeichnet sich Si₃N₄ durch eine hohe Temperaturschockfestigkeit, eine sehr gute elektrische Isolation und eine hohe Zug- und Druckfestigkeit aus. Die hohe Temperaturschockfestigkeit der Isolierringe aus Si₃N₄ ermöglicht ferner die Reinigung des Kessels, in dem die Korrosionstestsonde zum Einsatz kommt, mittels eines Wasserwäschers, ohne dass die Sonde bei der Reinigung herausgenommen werden müsste. Auch gegen starke und schnelle Temperaturschwanken, bspw. bei einem abrupten Stopp der Verbrennungsanlage, in der die Testsonde betrieben wird, sind die Isolierringe aus Si₃N₄ resistent.

Die Arbeitselektrode 11 die Gegenelektrode 7 und die Referenzelektrode 9 werden in der aus dem Stand der Technik bekannten 3-Elektroden-Schaltung über elektrische Leitungen, welche im Inneren des Sondenkopfs 16 und der Trägerlanze 15 verlaufen, mit einem Korrosionsmeter kontaktiert. Die Kalibrierelektrode 5 dient zur Erfassung der absoluten Massenkorrosionsrate. Hierfür wird die Masse der Kalibrierelektrode 5 vor und nach einer längeren Messperiode von typischerweise einigen Monaten erfasst. Aus dem Massenunterschied, der durch die Korrosion des Materials der Kalibrierelektrode hervorgerufen wird, kann die absolute Korrosionsrate ermittelt werden und damit eine Kalibrierung der elektrochemischen Messung erfolgen.

Der in Figur 2 gezeigte Sondenkopf 16 umfasst ferner an seinem hinteren, der Trägerlanze 15 zugewandten Ende optional einen Abstandhalter 2 und ein Übergangsstück 3, welche beide aus einer korrosionsbeständigen Nickelbasislegierung (bspw. Inconel®) oder aus einer Keramik wie Al₂O₃ oder Si₃N₄ sind. Zwischen dem Übergangsstück 3 und der sich daran anschließenden ersten Elektrode (Kalibrierelektrode 5) ist ein weiterer Isolierring 4, der bevorzugt ebenfalls aus Al₂O₃ oder besonders bevorzugt aus Si₃N₄ besteht, angeordnet. Die Reihenfolge der Elektroden 5, 7, 9 und 11 kann gegenüber dem hier zeichnerisch dargestellten Ausführungsbeispiel auch anders angeordnet sein. Am vorderen Ende wird der Sondenkopf 16 durch einen becher-, Scheiben- oder kappenförmigen Hut 14 abgeschlossen. Zwischen dem Hut 14 und der sich daran anschließenden vordersten Elektrode (Arbeitselektrode 11) ist ein weiterer Isolierring 12 angeordnet, der bevorzugt ebenfalls aus Al₂O₃ oder besonders bevorzugt aus Si₃N₄ besteht, um die Messelektrode 11 vom Hut 14 elektrisch zu isolieren. Am hinteren Ende des Sondenkopfs 16, welches der Trägerlanze 15 zugewandt ist, ist der Sondenkopf 16 durch eine Endplatte 1 abgeschlossen. Der hohlzylindrische Sondenkopf 16 ist damit an seinem vorderen Ende durch den Hut 14 und an seinem hinteren Ende durch die Endplatte 1 stirnseitig verschlossen. In der Endplatte 1 sind Durchgangsbohrungen 18, 19 vorgesehen, durch welche die Kühlleitungen der Luftkühlung sowie die elektrischen Leitungen für die Kontaktierung der Elektroden aus dem Inneren der Trägerlanze 15 in den Sondenkopf 16 geführt werden.

Um die gewünschte Dichtigkeit des Sondenkopfs 15 zu erzielen, welche erforderlich ist, um den Eintritt der korrosiven Abgase in das Innere des Sondenkopfs 16 zu verhindern, ist in dem Sondenkopf 16 eine Zugeinrichtung vorgesehen. Diese Zugeinrichtung setzt die Elektroden 5, 7, 9 und 11 sowie den Abstandhalter 2, das Übergangsstück 3 und die Isolierringe 4, 6, 8, 10 und 12 unter eine Zugspannung und drückt diese an ihren jeweiligen Stirnflächen so eng aneinander, dass kein Gasdurchtritt möglich ist. Die Zugeinrichtung wird bei dem hier zeichnerisch dargestellten Ausführungsbeispiel gebildet durch eine Zugplatte, welche von der Endplatte 1 am hinteren Ende des Sondenkopfs 16 gebildet wird, den Hut 14 am vorderen Ende und eine Zugstange 13, welche zwischen der Endplatte 1 und dem Hut 14 zur Erzeugung der Zugspannung verspannt wird. Die Zugstange 13 weist an ihrem vorderen Ende ein Außengewinde auf. Die Zugstange 13 kann auch als Gewindestange ausgebildet sein. An ihrem vorderen Ende ist die Zugstange 13 mit einer im Zentrum des Huts 14 als Sackbohrung eingebrachten Gewindebohrung 17 verschraubt. An ihrem hinteren Ende ist die Zugstange 13 durch eine Bohrung 17' in der Endplatte 1 durchgeführt und über eine Mutter unter Spannung verschraubt. Die Zugstange 13 ist so dimensioniert, dass sie bei möglichst fester Verschraubung an der Endplatte 1 eine ausreichend hohe Zugspannung auf die dazwischen angeordneten Teile, also die Elektroden, die Isolierringe, den Abstandhalter und (wenn vorhanden) das Übergangsstück, erzeugt. Die Zugstange 13 wird mit einem Drehmoment von mehr als 10 Nm, bevorzugt von etwa 50 Nm zwischen dem Hut 14 und der Endplatte 1 verschraubt. Die sich ergebende Zugspannung liegt im Bereich von 1,5 - 3,3 GPa.. Bei höheren Zugspannungen besteht die Gefahr, dass die Elektroden oder die Isolierringe beschädigt werden. Bevorzugt weist die Zugstange 13 einen Durchmesser von wenigstens 6mm, bevorzugt von 8mm auf, um die erforderliche Zugspannung ohne Bruch der Zugstange 13 erzeugen zu können. Stirnseitig ist in der Zugstange an ihrem hinteren Ende eine Gewindebohrung vorgesehen, in welche eine weitere, hier zeichnerisch nicht dargestellte Zugstange eingeschraubt wird. Die weitere Zugstange ist dünner als die Zugstange 13 und verläuft im Innern der Trägerlanze 15 bis zu deren Ende. Dort ist sie über eine Befestigungsmutter verspannt.

Die Verspannung der Elektroden und der Isolierringe in dem Sondenkopf 16 reicht jedoch wegen der unterschiedlichen thermischen Ausdehnungen bei sehr hohen Messtemperaturen von weit mehr als 400°C häufig nicht aus, um die erforderliche Dichtigkeit zu gewährleisten. Sowohl die unterschiedlichen thermischen Ausdehnungen der Elektroden gegenüber den Isolierringen als auch der Außenseite des Sondenkopfs gegenüber der längs der Mittelachse im Inneren der Sonde verlaufenden Zugstange 13 führen zu thermischen und thermomechanischen Spannungen. Im Inneren des Sondenkopfs herrscht unter Messbedingungen eine niedrigere Temperatur als am Außenumfang, was zu thermischen Verspannungen führt. Dies führt bei Messtemperaturen von über 400°C (bspw. bei 700°C) häufig zu einer Beschädigung der Isolierringe. Die unterschiedlichen thermischen Ausdehnungskoeffizienten der Elektrodenmaterialien (Stahl) und der Isoliermaterialien (Keramik) der Isolierteile führen unter den hohen Umgebungstemperaturen während der In-situ-Messungen zu hohen Zugspannungen, welche Risse in den Materialien, insbesondere der Isolierringe, und dadurch undichte Stellen im Sondenkopf erzeugen können.

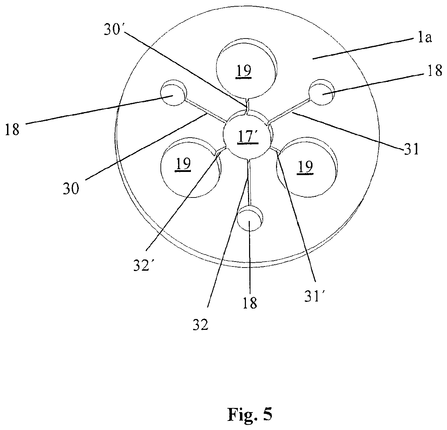

Zum Ausgleich dieser thermischen bzw. thermomechanischen Spannungen ist vorgesehen, die Endplatte 1 als Scheibe la auszugestalten und mit Schlitzen 30, 31, 32 zu versehen, welche sich in Querrichtung der Scheibe la erstrecken. In Figur 5 ist die Scheibe 1a, welche die Endplatte 1 bildet und zwischen 5 und 15 mm dick ist, in einer perspektivischen Ansicht gezeigt. Wie aus Figur 5 ersichtlich, erstrecken sich die Schlitze 30, 31, 32 radial nach außen und sie sind radialsymmetrisch angeordnet. In dem dargestellten Ausführungsbeispiel sind insgesamt sechs Schlitze in Form von zwei Schlitztripel, nämlich ein erstes Schlitztripel mit längeren Schlitzen 30, 31, 32 und ein zweites Schlitztripel mit kürzeren Schlitzen 30', 31', 32' vorgesehen, welche jeweils abwechselnd auf der kreisrunden Scheibe la radial in 60°-Abständen angeordnet sind. In der Scheibe la sind ferner die Durchgangsbohrungen 18, 19 zur Durchführung der elektrischen Leitungen und der Kühlleitungen sowie eine zentrale Bohrung 17' zum Durchführen der Zugstange 13 vorgesehen. Die Schlitze 30, 31, 32 bzw. 30', 31', 32' erstrecken sich jeweils zwischen der zentralen Bohrung 17' und einer Durchgangsbohrung 18 oder 19. Die Anzahl und radiale Anordnung der Schlitze kann auch anders als in dem hier gezeigten Ausführungsbeispiel gewählt werden, wobei aus Gründen einer symmetrischen Spannungsverteilung bevorzugt eine radialsymmetrische Anordnung der Schlitze auf der Scheibe la gewählt wird. Die Schlitze in der Scheibe 1a, welche bevorzugt aus Edelstahl oder Federstahl ist, verleihen der Scheibe la eine Elastizität (ähnlich einer Blattfeder) und führen damit zu einem Ausgleich der thermischen Spannungen in der Endplatte 1. Vergleichsversuche haben gezeigt, dass die Schlitze in der Lage sind, thermisch bedingte Längenänderungen in der Größenordnung von 10-100 µm auszugleichen. Die Schlitze in der Endplatte 1 ermöglichen selbst bei hohen Temperaturen von 600 ° C und mehr eine Dichtigkeit des Sondenkopfs 16.

Zum Ausgleich der thermischen bzw. thermomechanischen Spannungen kann die Endplatte 1 zusätzlich durch mehrere in Längsrichtung der Testsonde hintereinander angeordnete und aneinander anliegende Scheiben 1a, 1b, 1c gebildet werden. Bei dem in Figur 4 gezeigten bevorzugten Ausführungsbeispiel der Erfindung ist die Endplatte 1 durch drei gleichförmige Scheiben 1a, 1b, 1c zusammengesetzt, welche jeweils wie die in Figur 5 gezeigte Scheibe la gestaltet sind. Die drei Scheiben 1a, 1b, 1c sind bevorzugt aus Federstahl und in Längsrichtung der Testsonde hintereinander angeordnet und über die Zugstange 13 verspannt. Sie werden aufgrund der Verspannung durch die Zugstange 13 an ihren Scheibenflächen mit der Zugspannung gegeneinander gedrückt. Die Scheiben weisen jeweils eine Dicke von 2-4 mm und bevorzugt von ca. 3mm auf. In jeder der drei Scheiben sind jeweils die Durchgangsbohrungen 18, 19 zur Durchführung der elektrischen Leitungen und der Kühlleitungen sowie eine zentrale Bohrung 17' zum Durchführen der Zugstange 13 vorgesehen. Die drei Scheiben 1a, 1b, 1c sind so hintereinander angeordnet, dass die Bohrungen 17', 18 und 19 jeweils fluchten, so dass darin die Leitungen und die Zugstange 13 durchgeführt werden können. Bei dem Ausführungsbeispiel der Figur 4 wurde das Distanzstück 3 und der zusätzliche Isolierring 4 weg gelassen.

Die hinsichtlich der thermischen Widerstandsfähigkeit besten Ergebnisse konnten mit Testsonden erzielt werden, bei denen drei jeweils mit Querschlitzen 30, 31, 32 versehene Scheiben 1a, 1b, 1c zur Bildung der Endplatte 1 des Sondenkopfs 16 verwendet worden sind. Vergleichsversuche haben ergeben, dass solche Testsonden Temperaturen van ca. 700°C über einem- längeren Zeitraum stand halten können, ohne dass nennenswerte Undichtigkeiten im Sondenkopf 16 auftreten. Daraus ergibt sich, dass die hier zur Reduzierung der thermischen und thermomechanischen Verspannungen im Sondenkopf 16 vorgeschlagenen Maßnahmen zur Optimierung der Dichtigkeit des Sondenkopfs auch miteinander kombiniert werden können.

Gegenüber den aus dem Stand der Technik bekannten Korrosionstestsonden weist die erfindungsgemäße Sonde zusätzlich zu den oben beschriebenen Eigenschaften den Vorteil auf, dass der Sondenkopf 16 von der Trägerlanze 15 getrennt und von dieser abnehmbar ist. Durch die Ausbildung des von der Trägerlanze 15 abnehmbaren Sondenkopfs 16 als Wechselkopf ist ein schneller und einfacher Austausch der Elektroden möglich. Durch die im Sondenkopf 16 angeordnete Zugeinrichtung kann ferner eine ausreichend hohe Zugspannung erzeugt werden, um die Ringteile des Sondenkopfs 16, also insbesondere die Elektroden und die Isolierringe sowie den Abstandhalter, so gegeneinander zu verspannen und deren Dichtflächen so eng aneinander zu drücken, dass kein Gas mehr in das Innere des Sondenkopfs 16 eindringen kann. Die Anordnung der Zugeinrichtung innerhalb des Sondenkopfs 16 bewirkt eine thermische Entkopplung der Teile der Zugeinrichtung gegenüber der Trägerlanze 15. Dadurch kann der für die Dichtigkeit nachteilige Effekt der unterschiedlichen Ausdehnungskoeffizienten der verwendeten Materialien weiter minimiert werden.

## Patentansprüche

1. Sondenkopf für eine Korrosionstestsonde, welcher an seinem vorderen Ende von einem Hut (14) und an seinem hinteren Ende durch eine Endplatte (1) begrenzt ist und wenigstens zwei voneinander durch Isolierteile (8, 10) elektrisch isolierte Elektroden (7, 11) aufweist, wobei in dem Sondenkopf (16) zwischen dem Hut (14) und der Endplatte (1) eine Zugeinrichtung angeordnet ist, welche den Sondenkopf (16) in Längsrichtung unter Zugspannung setzt und dadurch die Elektroden (7, 11) und die Isolierteile (8, 10) gegeneinander drückt,
**dadurch gekennzeichnet, dass**
die Endplatte (1) durch eine Scheibe (1a) gebildet ist, in der Schlitze (30, 31, 32) vorgesehen sind, welche sich radial in Querrichtung der Scheibe (1a) erstrecken.

2. Sondenkopf nach Anspruch 1,
**dadurch gekennzeichnet, dass**
die Endplatte (1) durch wenigstens zwei in Längsrichtung der Testsonde hintereinander angeordnete und aneinander anliegende Scheiben (1a, 1b) gebildet ist.

3. Sondenkopf nach Anspruch 1 oder 2,
**dadurch gekennzeichnet, dass**
im Sondenkopf (16) vor der Endplatte (1) ein Abstandhalter (2) angeordnet ist.

4. Sondenkopf nach Anspruch 1,
**dadurch gekennzeichnet, dass**
sich die Schlitze (30, 31, 32) radial nach außen erstrecken und radialsymmetrisch angeordnet sind.

5. Sondenkopf nach einem der voranstehenden Ansprüche,
**dadurch gekennzeichnet, dass**
die Endplatte (1) durch wenigstens drei in Längsrichtung der Testsonde hintereinander angeordnete und aneinander anliegende Scheiben (1a, 1b, 1c) gebildet ist, wobei in jeder Scheibe (1a, 1b, 1c) mehrere Schlitze (30, 31, 32) vorgesehen sind, welche sich radial in Querrichtung der jeweiligen Scheibe (1a, 1 b, 1c) erstrecken.

6. Sondenkopf nach einem der voranstehenden Ansprüche,
**dadurch gekennzeichnet, dass**
in der oder jeder Scheibe (1 a, 1 b, 1c) mehrere Durchgangsbohrungen (17',18, 19) vorgesehen sind, wobei ggf. die Scheiben (1 a, 1 b, 1c) so übereinander angeordnet sind, dass die Durchgangsbohrungen (17', 18, 19) miteinander fluchten.

7. Sondenkopf nach einem der voranstehenden Ansprüche,
**dadurch gekennzeichnet, dass**
die oder jede Scheibe (1a, 1b, 1c) aus Stahl, insbesondere Edel- oder Federstahl, oder einer Nickellegierung gefertigt sind.

8. Sondenkopf nach einem der voranstehenden Ansprüche,
**dadurch gekennzeichnet, dass**
der Sondenkopf (16) zylindrisch ausgebildet ist und an seinem hinteren Ende von der scheibenförmigen Endplatte (1) und an seinem vorderen Ende von einem scheibenförmigen Hut (14) abgeschlossen wird und dass die zwischen der Endplatte (1) und dem Hut (14) angeordneten Elektroden (7, 11) und Isolierteile (8, 10) jeweils ringförmig sind.

9. Sondenkopf nach Anspruch 8,
**dadurch gekennzeichnet, dass**
die Zugeinrichtung von dem am vorderen Ende der Sonde angeordneten Hut (14) sowie einer Zugplatte und einer Zugstange (13) gebildet ist, wobei die Zugstange (13) zwischen der Zugplatte und dem Hut (14) angeordnet ist.

10. Sondenkopf nach einem der voranstehenden Ansprüche,
**dadurch gekennzeichnet, dass**
die Isolierteile (8, 10) bzw. die Isolierscheiben (8, 10, 12) aus einer Keramik, insbesondere aus Al₂O₃ oder Si₃N₄ gefertigt sind.

11. Korrosionstestsonde zur Erfassung der Korrosionsrate von Leitungen, Rohren oder Behältern, welche von einem korrosiven Fluid um- oder durchströmt werden, wobei die Korrosionstestsonde einen Sondenkopf (16) nach einem der voranstehenden Ansprüche sowie eine an der Endplatte (1) des Sondenkopfs (16) abnehmbar angeordnete Trägerlanze (15) umfasst.

12. Korrosionstestsonde nach Anspruch 11,
**dadurch gekennzeichnet, dass**
die Trägerlanze (15) am stirnseitigen Ende des Sondenkopfs (16) befestigt und gegen den Sondenkopf (16) verspannt ist.

13. Korrosionstestsonde nach Anspruch 11 oder 12,
**dadurch gekennzeichnet, dass**
in der Trägerlanze (15) eine Kühleinrichtung vorgesehen ist.

14. Korrosionstestsonde nach Anspruch 13,
**dadurch gekennzeichnet, dass**
die Kühleinrichtung eine Wasserkühlung zur Kühlung der Trägerlanze (15) und zusätzlich eine Kühlleitung zur Zuführung eines Kühlfluids zum Sondenkopf (16) umfasst, wobei die Temperatur des Sondenkopfs (16) mittels des Kühlfluids und über eine Temperaturregelung auf eine gewünschte Messtemperatur regelbar ist.

## Claims

1. Sensor head for a corrosion test sensor, which at its front end is delimited by a cap (14) and at its rear end by an end plate (1) and comprises at least two electrodes (7, 11) electrically insulated from each other by insulating parts (8, 10), wherein in the sensor head (16) between the cap (14) and the end plate (1) a draw unit is arranged, which applies a tensile force to the sensor head (16) in the longitudinal direction thus pushing the electrodes (7,11) and the insulating parts (8, 10) against each other, **characterised in that** the end plate (1) is formed by a disc (1a) in which slots (30, 31, 32) are provided, extending radially in the transverse direction of the disc (1a).

2. Sensor head according to claim 1, **characterised in that** the end plate (1) is formed by at least two discs (1a, 1b) arranged one behind the other and closely together in the longitudinal direction of the test sensor.

3. Sensor head according to claim 1 or claim 2, **characterised in that** in the sensor head (16) in front of the end plate (1) a spacer (2) is arranged.

4. Sensor head according to claim 1, **characterised in that** the slots (30, 31, 32) extend radially outwards and are arranged radially symmetrically.

5. Sensor head according to any one of the preceding claims, **characterised in that** the end plate (1) is formed by at least three discs (1a, 1b, 1c) arranged one behind the other and closely together in the longitudinal direction of the test sensor, wherein in each disc (1a, 1b, 1c) a plurality of slots (30, 31, 32) are arranged, which extend radially in the transverse direction of the respective disc (1a, 1b, 1c).

6. Sensor head according to any one of the preceding claims, **characterised in that** in the or each disc (1a, 1b, 1c) a plurality of through holes (17', 18, 19) are provided, wherein if necessary the discs (1a, 1b, 1c) are arranged one on top of each other such that the through holes align.

7. Sensor head according to any one of the preceding claims, **characterised in that** the or each disc (1a, 1b, 1c) is made from steel, in particular stainless or spring steel, or a nickel alloy.

8. Sensor head according to any one of the preceding claims, **characterised in that** the sensor head (16) has a cylindrical design and at its rear end is terminated by the disc-shaped end plate (1) and at its front end by a disc-shaped cap (14) and **in that** electrodes (7, 11) and insulating parts (8, 10) arranged between the end plate (1) and the cap (14) are in each case circular.

9. Sensor head according to claim 8, **characterised in that** the draw unit is formed by the cap (14) arranged at the front end of the sensor and a draw plate and a drawbar (13), wherein the drawbar (13) is arranged between the draw plate and the cap (14).

10. Sensor head according to any one of the preceding claims, **characterised in that** the insulating parts (8, 10) or the insulating discs (8, 10, 12) are made from a ceramic, in particular from Al₂O₃ or Si₃N₄.

11. Corrosion test sensor for detecting the corrosion rate of lines, pipes or containers, through or around which a corrosive fluid flows, wherein the corrosion test sensor has a sensor head (16) according to any one of the preceding claims and comprises a carrier lance (15) removably arranged on the end plate (1) of the sensor head (16).

12. Corrosion test sensor according to claim 11, **characterised in that** the carrier lance (15) is secured to the front end of the sensor head (16) and is braced against the sensor head (16).

13. Corrosion test sensor according to claim 11 or claim 12, **characterised in that** in the carrier lance (15) a cooling device is provided for.

14. Corrosion test sensor according to claim 13, **characterised in that** the cooling device is a water cooling system for cooling the carrier lance (15) and in addition comprises a coolant line for carrying a coolant to the sensor head (16), wherein the temperature of the sensor head (16) can be adjusted by means of the coolant and via a temperature controller to a desired measuring temperature.

## Revendications

1. Tête de sonde pour une sonde de test de corrosion, tête de sonde qui, au niveau de son extrémité avant, est délimitée par un chapeau (14) et, au niveau de son extrémité arrière, est délimitée par une plaque de terminaison (1), et qui présente au moins deux électrodes (7, 11) isolées électriquement l'une de l'autre par des pièces isolantes (8, 10), où un dispositif de traction est disposé, dans la tête de sonde (16), entre le chapeau (14) et la plaque de terminaison (1), dispositif de traction qui soumet la tête de sonde (16) à une contrainte de traction dans la direction longitudinale et qui, de ce fait, exerce une pression en poussant les électrodes (7, 11) et les pièces isolantes (8, 10) les unes contre les autres,
**caractérisée**
**en ce que** la plaque de terminaison (1) est formée par une rondelle (1a) dans laquelle sont prévues des fentes (30, 31, 32) qui s'étendent radialement dans la direction transversale de la rondelle (1a).

2. Tête de sonde selon la revendication 1,
**caractérisée**
**en ce que** la plaque de terminaison (1) est formée par au moins deux rondelles (1a, 1b) disposées l'une derrière l'autre dans le sens de la longueur de la sonde de test et venant en appui l'une contre l'autre.

3. Tête de sonde selon la revendication 1 ou 2,
**caractérisée**
**en ce qu'**un élément d'écartement (2) est disposé dans la tête de sonde (16), en amont de la plaque de terminaison (1).

4. Tête de sonde selon la revendication 1,
**caractérisée**
**en ce que** les fentes (30, 31, 32) s'étendent vers l'extérieur dans le sens radial et sont disposées symétriquement dans le sens radial.

5. Tête de sonde selon l'une quelconque des revendications précédentes,
**caractérisée**
**en ce que** la plaque de terminaison (1) est formée par au moins trois rondelles (1a, 1b, 1c) disposées les unes derrière les autres dans le sens de la longueur de la sonde de test et venant en appui les unes contre les autres, où il est prévu, dans chaque rondelle (1a, 1b, 1c), plusieurs fentes (30, 31, 32) qui s'étendent radialement dans la direction transversale de la rondelle respective (1a, 1b, 1c).

6. Tête de sonde selon l'une quelconque des revendications précédentes,
**caractérisée**
**en ce qu'**il est prévu dans la rondelle ou dans chaque rondelle (1a, 1b, 1c) plusieurs trous de passage (17', 18, 19), où éventuellement les rondelles (1a, 1b, 1c) sont disposées en étant superposées de manière telle, que les trous de passage (17', 18, 19) soient alignés les uns par rapport aux autres.

7. Tête de sonde selon l'une quelconque des revendications précédentes,
**caractérisée**
**en ce que** la rondelle ou chaque rondelle (1a, 1b, 1c) est fabriquée en acier, en particulier en acier inoxydable ou en acier à ressorts, ou bien à base d'un alliage de nickel.

8. Tête de sonde selon l'une quelconque des revendications précédentes,
**caractérisée**
**en ce que** la tête de sonde (16) est configurée de manière cylindrique et, au niveau de son extrémité arrière, est fermée par une plaque de terminaison (1) en forme de rondelle et, au niveau de son extrémité avant, est fermée par un chapeau (14) en forme de rondelle, et **en ce que** les électrodes (7, 11) disposées entre la plaque de terminaison (1) et le chapeau (14), et les pièces isolantes (8, 10), sont à chaque fois de forme annulaire.

9. Tête de sonde selon la revendication 8,
**caractérisée**
**en ce que** le dispositif de traction est formé par le chapeau (14) disposé au niveau de l'extrémité avant de la sonde, ainsi que par une plaque de traction et par une tige de traction (13), où la tige de traction (13) est disposée entre la plaque de traction et le chapeau (14).

10. Tête de sonde selon l'une quelconque des revendications précédentes,
**caractérisée**
**en ce que** les pièces isolantes (8, 10) ou les rondelles isolantes (8, 10, 12) sont fabriquées en étant composées d'une céramique, en particulier composées de Al₂O₃ ou de Si₃N₄.

11. Sonde de test de corrosion servant à la détection du taux de corrosion concernant des conduites, des tuyaux ou des récipients qui sont baignés ou traversés par un fluide corrosif, où la sonde de test de corrosion comprend une tête de sonde (16) selon l'une quelconque des revendications précédentes, ainsi qu'une lance support (15) disposée en étant amovible au niveau de la plaque de terminaison (1) de la tête de sonde (16).

12. Sonde de test de corrosion selon la revendication 11,
**caractérisée**
**en ce que** la lance support (15) est fixée au niveau de l'extrémité, côté frontal, de la tête de sonde (16) et serrée contre la tête de sonde (16).

13. Sonde de test de corrosion selon la revendication 11 ou 12,
**caractérisée**
**en ce qu'**il est prévu un dispositif de refroidissement dans la lance support (15).

14. Sonde de test de corrosion selon la revendication 13,
**caractérisée**
**en ce que** le dispositif de refroidissement comprend un refroidissement par eau pour le refroidissement de la lance support (15) et comprend en outre une conduite de refroidissement servant à l'alimentation en fluide de refroidissement fourni à la tête de sonde (16), où la température de la tête de sonde (16) peut être réglée à une température de mesure souhaitée, au moyen du fluide de refroidissement et par une régulation de la température.
